# EUROPEAN PATENT APPLICATION

(11) **EP 4 814 211 A1**
(43) Date of publication of application: **30.09.2026**
(21) Application number: 26163871.2
(22) Date of filing: 11.03.2026
(51) Int. Cl.: E02F 9/20, E02F 9/22, F15B 1/00

(54) **WORKING MACHINE CONTROL METHOD, WORKING MACHINE CONTROL PROGRAM, WORKING MACHINE CONTROL SYSTEM, AND WORKING MACHINE**

(30) Priority: 25.03.2025 JP 2025050190
(71) Applicant: Yanmar Holdings Co., Ltd., Osaka (JP)
(72) Inventor: TAMURA, Kazuki, Fukuoka (JP); KABATA, Hiroki, Fukuoka (JP); SHIBATA, Kazuhisa, Fukuoka (JP)
(74) Representative: Isarpatent

(57) **Abstract**

[Problem] To provide a working machine control method, a working machine control program, a working machine control system, and a working machine, in which operation is less likely to be hindered even in a low temperature environment.

[Solution] A control method of a working machine 3 is a control method of the working machine 3 including an electric motor 41 driven by electric power of a battery 50 and a hydraulic pump 42 driven by the electric motor 41 and configured to supply hydraulic oil to a hydraulic actuator. This control method includes: driving the electric motor 41 at a steady rotation speed when a monitored temperature is in a normal temperature region; and setting an upper limit value of a rotation speed of the electric motor 41 to a regulated rotation speed lower than the steady rotation speed when the monitored temperature is in a low temperature region lower than the normal temperature region.

## Description

### TECHNICAL FIELD

The present invention relates to a working machine control method, a working machine control program, and a working machine control system used for a working machine including a hydraulic pump driven by an electric motor, and a working machine.

### BACKGROUND ART

As a related art, a working machine (electric construction machine) including a hydraulic pump driven by an electric motor (electric motor) is known (see, for example, Patent Document 1). The hydraulic pump drives a hydraulic actuator by supplying hydraulic oil (pressure oil) toward the hydraulic actuator such as a traveling motor.

In the working machine according to the related art, an inverter is connected to the electric motor, and a rotation speed thereof is controlled by a system controller connected to the inverter. Then, when a high-speed side is selected by a traveling mode switch and an energy saving mode switch is turned off, the system controller automatically increases the rotation speed of the electric motor according to a manipulation amount of a traveling lever/pedal device. As a result, the hydraulic pump can supply the hydraulic oil corresponding to a traveling speed of the working machine toward the traveling motor.

### PRIOR ART DOCUMENT

### PATENT DOCUMENT

Patent Document 1: JP-A-2011-184922

### SUMMARY OF INVENTION

### TECHNICAL PROBLEM

In a low temperature environment, since an output of a battery (main battery) that supplies electric power to an electric motor decreases, an output (hydraulic pressure) of a hydraulic pump driven by the electric motor may also decrease. Therefore, in a low temperature environment, for example, there is a possibility that the hydraulic pump cannot secure an output necessary for simultaneously driving a traveling motor and a working unit (boom cylinder or the like).

An object of the present invention is to provide a working machine control method, a working machine control program, a working machine control system, and a working machine, in which operation is less likely to be hindered even in a low temperature environment.

### SOLUTION TO PROBLEM

A working machine control method according to one aspect of the present invention is a control method of a working machine including: an electric motor driven by electric power of a battery; and a hydraulic pump driven by the electric motor and configured to supply hydraulic oil to a hydraulic actuator. The control method includes: driving the electric motor at a steady rotation speed when a monitored temperature is in a normal temperature region; and setting an upper limit value of a rotation speed of the electric motor to a regulated rotation speed lower than the steady rotation speed when the monitored temperature is in a low temperature region lower than the normal temperature region.

A working machine control program according to one aspect of the present invention is a program for causing one or more processors to execute the working machine control method.

A working machine control system according to one aspect of the present invention is used in a working machine including an electric motor driven by electric power of a battery and a hydraulic pump driven by the electric motor and configured to supply hydraulic oil to a hydraulic actuator, and includes a drive processing unit and a limit processing unit. The drive processing unit drives the electric motor at a steady rotation speed when a monitored temperature is in a normal temperature region. The limit processing unit sets an upper limit value of a rotation speed of the electric motor to a regulated rotation speed lower than the steady rotation speed when the monitored temperature is in a low temperature region lower than the normal temperature region.

A working machine according to one aspect of the present invention includes the working machine control system, and a machine body on which the electric motor is mounted.

### ADVANTAGEOUS EFFECTS OF INVENTION

According to the present invention, it is possible to provide a working machine control method, a working machine control program, a working machine control system, and a working machine, in which operation is less likely to be hindered even in a low temperature environment.

### BRIEF DESCRIPTION OF DRAWINGS

Fig. 1 is a schematic perspective diagram illustrating an overall configuration of a working machine according to a first embodiment;
Fig. 2 is a schematic diagram illustrating a hydraulic circuit and the like of the working machine according to the first embodiment;
Fig. 3 is a conceptual diagram illustrating an example of a control map used in a working machine control system according to the first embodiment;
Fig. 4 is a schematic diagram illustrating an idle-up function of the working machine control system according to the first embodiment; and
Fig. 5 is a schematic diagram illustrating a monitored temperature of the working machine control system according to the first embodiment.

### DESCRIPTION OF EMBODIMENTS

Hereinafter, an embodiment of the present invention will be described with reference to the accompanying drawings. The following embodiment is an example embodying the present invention, and is not intended to limit the technical scope of the present invention.

### (First Embodiment)

### [1] Overall configuration

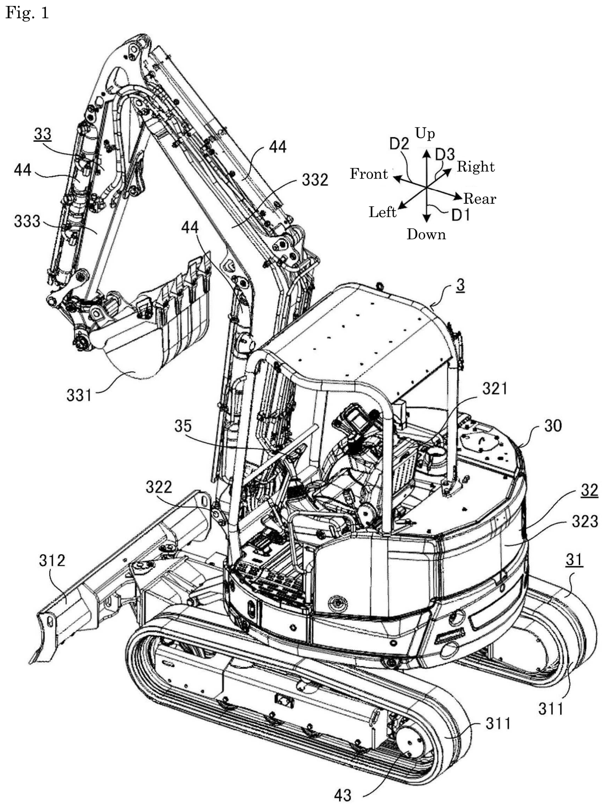

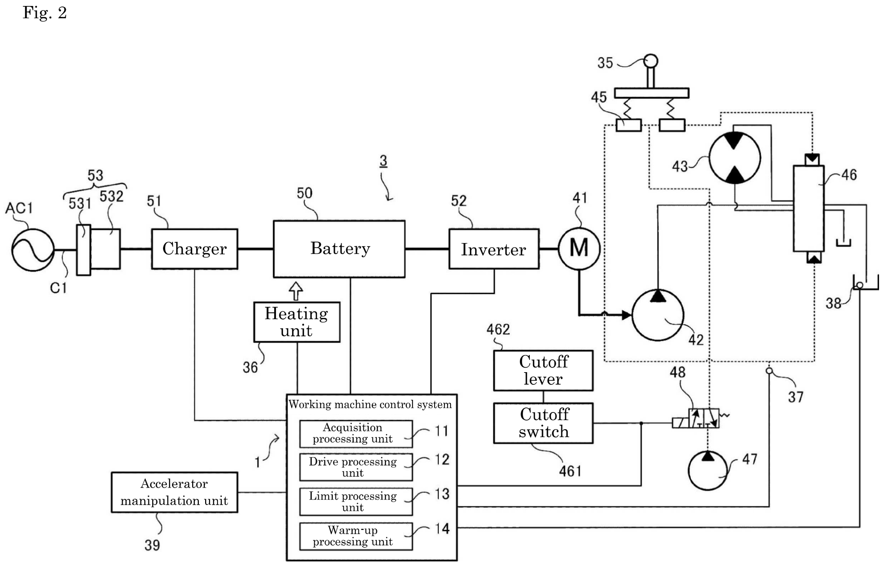

As illustrated in Fig. 1, a working machine 3 according to the present embodiment includes a traveling unit 31, a turning unit 32, and a working unit 33 in a machine body 30. Moreover, as illustrated in Fig. 2, the working machine 3 further includes a working machine control system 1 (hereinafter, also simply referred to as "control system 1"). In addition, as illustrated in Fig. 2, the machine body 30 further includes a manipulation device 35, a heating unit 36, a pressure sensor 37, a temperature sensor 38, an accelerator manipulation unit 39, an electric motor 41, a battery 50, and the like.

The "working machine" in the present disclosure means various machines for work, and is, for example, a working vehicle such as a backhoe (including a hydraulic excavator, a mini excavator, and the like), a wheel loader, and a carrier. The working machine 3 includes the working unit 33 configured to be able to execute one or more types of work. The working machine 3 is not limited to a "vehicle", and may be, for example, a working ship or a working flying object such as a drone or a multicopter. Furthermore, the working machine 3 is not limited to a construction machine (construction machine), and may be, for example, an agricultural machine (agricultural machine) such as a rice transplanter, a tractor, or a combine. In the present embodiment, unless otherwise specified, a case where the working machine 3 is a backhoe with a hanging function (with a crane function), and can execute, as work, not only hanging work but also excavation work, ground leveling work, groove excavation work, loading work, or the like will be described as an example.

Moreover, in the present embodiment, for convenience of description, a vertical direction in a state in which the working machine 3 can be used is defined as an up-down direction D1. Furthermore, in a non-turning state of the turning unit 32, a front-rear direction D2 and a left-right direction D3 are defined with reference to a direction viewed from a user (operator) riding on (a driving unit 321 of) the working machine 3. In other words, each direction used in the present embodiment is a direction defined with reference to the machine body 30 of the working machine 3, a direction in which the machine body 30 moves when the working machine 3 moves forward is "forward", and a direction in which the machine body 30 moves when the working machine 3 moves rearward is "rearward". Similarly, a direction in which a front end portion of the machine body 30 moves when the working machine 3 turns right is "rightward", and a direction in which the front end portion of the machine body 30 moves when the working machine 3 turns left is "leftward". However, these directions are not intended to limit the directions of use (directions during use) of the working machine 3.

In the working machine 3 according to the present embodiment, at least a part of a drive device that generates power is motorized. In the present embodiment, as an example, the working machine 3 is an electric working machine having a power source including the electric motor 41 (see Fig. 2) in a drive mechanism. The electric motor 41 is supplied with electric power (electric energy) and generates power. More specifically, the electric motor 41 is an alternating-current motor (AC electric motor) driven by AC power.

The electric motor 41 operates by being supplied with the electric power from the battery 50 (see Fig. 2) mounted on the machine body 30. The power generated by the electric motor 41 is used at least for driving a hydraulic pump 42 (see Fig. 2) in the drive device.

In the working machine 3, the hydraulic pump 42 is driven by the electric motor 41, and hydraulic oil is supplied from the hydraulic pump 42 to hydraulic actuators (including a hydraulic motor 43, a hydraulic cylinder 44, and the like) of parts of the machine body 30, so that the machine body 30 is driven. Moreover, the working machine 3 is controlled, for example, by the user (operator) riding on the driving unit 321 of the machine body 30 and manipulating a manipulation lever or the like of the manipulation device 35.

In the present embodiment, since it is assumed that the working machine 3 is a ride-on type backhoe as described above, the working unit 33 is driven in accordance with the manipulation of the user (operator) riding on the driving unit 321 and executes work such as excavation work. The driving unit 321 on which the user rides is provided in the turning unit 32. In the example of Fig. 1, the driving unit 321 of a canopy type is exemplified, but the driving unit 321 is preferably of a cabin type. The driving unit 321 of the cabin type includes a cabin, and the user rides in a cabin space inside the cabin. The driving unit 321 of the canopy type includes a canopy (roof), and the user rides in a space below the canopy. Furthermore, the driving unit 321 is not limited to the cabin type and the canopy type, and may be, for example, a floor type or the like that does not include a cabin and a canopy, and that allows the user to ride in a space opened upward.

The traveling unit 31 has a traveling function and is configured to be able to travel (including turn) on the ground. The traveling unit 31 includes, for example, a pair of left and right crawlers 311, a blade 312, and the like. The traveling unit 31 further includes the traveling hydraulic motor 43 (hydraulic actuator) for driving the crawlers 311.

The turning unit 32 is located above the traveling unit 31, and is configured to be able to turn about a rotation axis along the vertical direction with respect to the traveling unit 31. The turning unit 32 includes a turning hydraulic motor (hydraulic actuator) and the like. In addition to the driving unit 321, the electric motor 41, the hydraulic pump 42, and the like are mounted on the turning unit 32. Furthermore, a boom bracket 322 to which the working unit 33 is attached is provided at a front end portion of the turning unit 32.

The working unit 33 is configured to be capable of executing work including hanging work. The working unit 33 is supported by the boom bracket 322 of the turning unit 32 and executes work. The working unit 33 includes a bucket 331, a boom 332, an arm 333, and the like. The working unit 33 further includes hydraulic actuators (including the hydraulic cylinder 44, a hydraulic motor, and the like) for driving each unit.

The bucket 331 is a type of attachment (work tool) attached to the machine body 30 of the working machine 3, and includes an arbitrary instrument selected from a plurality of types of attachments according to the content of work. As an example, the bucket 331 is detachably attached to the machine body 30 and replaced according to the content of work. Examples of the attachment for the working machine 3 include, in addition to the bucket 331, various tools such as a breaker, an auger, a crusher, a fork, a fork claw, a steel cutter, an asphalt cutting machine, a mower, a ripper, a mulcher, a tilt rotator, and a tamper. The working unit 33 executes work by driving the bucket 331 using power from the drive device.

The boom 332 is rotatably supported by the boom bracket 322 of the turning unit 32. Specifically, the boom 332 is supported by the boom bracket 322 so as to be rotatable about the rotation axis along the horizontal direction. The boom 332 has a shape extending upward from the base end portion thereof supported by the boom bracket 322. The arm 333 is coupled to a distal end of the boom 332. The arm 333 is supported so as to be rotatable about a rotation axis along the horizontal direction with respect to the boom 332. The bucket 331 is attached to a distal end of the arm 333.

The working unit 33 operates by receiving power from the electric motor 41 as the power source. Specifically, the hydraulic pump 42 is driven by the electric motor 41, and hydraulic oil is supplied from the hydraulic pump 42 to the hydraulic actuators (hydraulic cylinder 44 and the like) of the working unit 33, so that parts (bucket 331, boom 332, and arm 333) of the working unit 33 operate.

In particular, in the present embodiment, the working unit 33 has an articulated structure in which the boom 332 and the arm 333 are individually rotatable. That is, when each of the boom 332 and the arm 333 rotates about the rotation axis along the horizontal direction, the articulated working unit 33 including the boom 332 and the arm 333 can be extended or folded as a whole, for example.

Similarly to the working unit 33, each of the traveling unit 31 and the turning unit 32 operates by receiving power from the electric motor 41 as the power source. That is, hydraulic oil is supplied from the hydraulic pump 42 to the hydraulic motor 43 of the traveling unit 31, the hydraulic motor of the turning unit 32, and the like, so that the turning unit 32 and the traveling unit 31 operate.

The electric motor 41 is mounted on the turning unit 32 together with the hydraulic pump 42 and the like. The electric motor 41 is driven by the electric power supplied from the battery 50 mounted on the turning unit 32.

Fig. 2 schematically illustrates an electric circuit (electrical connection relationship) and a hydraulic circuit of the working machine 3 according to the present embodiment. In Fig. 2, a power path (an electric path of a heavy current system) is indicated by a solid thick line, an electric signal path (an electric path of a weak current system) is indicated by a solid line, a highpressure oil path (for hydraulic oil) is indicated by a solid line, and a low pressure oil path (for pilot oil) is indicated by a dotted line. In addition, a thick arrow between the electric motor 41 and the hydraulic pump 42 indicates a power transmission path, and a white arrow between the heating unit 36 and the battery 50 indicates a heat transmission path.

As illustrated in Fig. 2, the working machine 3 includes, as hydraulic equipment, a remote control valve 45, a direction switching valve (control valve) 46, a pilot pump 47, a control valve 48, and the like, in addition to the hydraulic pump 42, the hydraulic motor 43, and the hydraulic cylinder 44 (not illustrated in Fig. 2). The working machine 3 further includes a cutoff switch 461, a cutoff lever 462, a heating unit 36, a pressure sensor 37, a temperature sensor 38, an accelerator manipulation unit 39, an electric motor 41, a battery 50, a charger 51, an inverter 52, and the like.

The hydraulic oil from the hydraulic pump 42 driven by the electric motor 41 is supplied to the hydraulic motor 43 of the traveling unit 31, the hydraulic motor of the turning unit 32, the hydraulic cylinder 44 of the working unit 33, and the like. As a result, hydraulic actuators such as the hydraulic motor 43 and the hydraulic cylinder 44 are driven.

The hydraulic actuator such as the hydraulic motor 43 is provided with the direction switching valve 46 of a pilot type capable of switching the direction and flow rate of the hydraulic oil from the hydraulic pump 42. The direction switching valve 46 is driven by being supplied with pilot oil as an input command from the pilot pump 47.

Here, for example, the remote control valve 45 is provided on a supply path of the pilot oil to the direction switching valve 46 corresponding to the hydraulic motor 43 of the traveling unit 31. The remote control valve 45 outputs a traveling manipulation command of the traveling unit 31 according to the operation of the manipulation device 35 (manipulation lever). The traveling manipulation command instructs a traveling operation (forward movement, rearward movement, or the like) of the traveling unit 31.

Similarly, a remote control valve is also provided on a supply path of the pilot oil to the direction switching valve corresponding to the hydraulic cylinder 44 of the working unit 33. The remote control valve outputs a working manipulation command of the working unit 33 according to the manipulation of the manipulation device 35. The working manipulation command instructs an expanding operation, a contracting operation, and the like of the working unit 33. Furthermore, a remote control valve is also provided on a supply path of pilot oil to a direction switching valve corresponding to the hydraulic motor of the turning unit 32. The remote control valve outputs a turning manipulation command of the turning unit 32 according to the manipulation of the manipulation device 35. The turning manipulation command instructs a turning operation (left turning, right turning, or the like) of the turning unit 32.

The control valve 48 includes an electromagnetic control valve (electromagnetic valve), and is inserted between the remote control valve 45 and the pilot pump 47. The control valve 48 is connected to a power supply via the cutoff switch 461, and operates according to a supply current from the power supply. The control valve 48 is herein assumed to be an (electromagnetic) proportional control valve, but is not limited thereto, and may be, for example, an on-off valve capable of switching between opening and cutoff of a flow path.

The control valve 48 opens the flow path of the pilot oil in an energized state, that is, in a state where a current as a control signal is supplied, and cuts off the flow path of the pilot oil in a non-energized state, that is, in a state where the current as the control signal is cut off. Therefore, when the supply current (control signal) to the control valve 48 is cut off, the hydraulic actuator (the hydraulic motor 43 or the like) corresponding to the remote control valve 45 cannot be driven, and the hydraulic actuator is forcibly stopped regardless of the manipulation of the manipulation device 35.

The cutoff switch 461 is linked to the cutoff lever 462. The cutoff lever 462 is disposed in the driving unit 321 of the machine body 30 and receives a manipulation input by the user (operator). In the present embodiment, as an example, the cutoff lever 462 can be manipulated along the up-down direction D1. The cutoff switch 461 is "off" when the cutoff lever 462 is at a "raised position", which is an upper end position of a movable range, and the cutoff switch 461 is "on" when the cutoff lever 462 is at a "lowered position", which is a lower end position of the movable range. Then, the cutoff switch 461 is connected to the control system 1, and on/off of the cutoff switch 461, that is, a manipulation state of the cutoff lever 462 is monitored by the control system 1.

Therefore, when the cutoff lever 462 is at the "lowered position", the control valve 48 is in the energized state, and the hydraulic actuator (hydraulic motor 43 or the like) is driven by the manipulation of the manipulation device 35. On the other hand, when the cutoff lever 462 is at the "raised position", the control valve 48 is in the non-energized state, and the hydraulic actuator is forcibly stopped regardless of the manipulation of the manipulation device 35. Therefore, in order to drive the hydraulic actuator (hydraulic motor 43 or the like), the user (operator) needs to manipulate the cutoff lever 462 to the "lowered position".

Furthermore, since each of the turning unit 32 and the working unit 33 also operates when the hydraulic oil is supplied from the hydraulic pump 42 to the hydraulic actuators (hydraulic motor 43 and the like), the turning unit 32 and the working unit 33 also cannot be driven when the cutoff lever 462 is at the "raised position". That is, when the cutoff lever 462 is at the "raised position", all of the traveling unit 31, the turning unit 32, and the working unit 33 are forcibly brought into an undrivable state.

In the present embodiment, a state in which the cutoff lever 462 is at the "raised position", that is, a state of the cutoff lever 462 when the working machine 3 cannot be manipulated is defined as a "locked state". On the other hand, a state in which the cutoff lever 462 is at the "lowered position", that is, a state of the cutoff lever 462 when the working machine 3 can be manipulated is defined as an "unlocked state".

In short, the cutoff switch 461 is in the "locked state", when turned off, in which the operation of the working machine 3 is limited (including prohibited), and is in an "unlocked state", when turned on, in which the operation of the working machine 3 is not limited. Then, when the cutoff lever 462 is at the "raised position" and the cutoff switch 461 is in the locked state (off), the operation of the working machine 3 is forcibly limited regardless of the manipulation of the manipulation device 35. The cutoff lever 462 is a lever that is manipulated when the operation of the working machine 3 is regulated (for example, locked) in this manner, and has the same meaning as a gate lock lever.

The manipulation device 35 is disposed in the driving unit 321 of the machine body 30, and is a user interface for receiving a manipulation input by the user (operator). The manipulation device 35 includes, for example, a manipulation lever, and controls the remote control valve 45 according to a manipulation amount with respect to the manipulation lever. As a result, the operator can actuate the remote control valve 45 by manipulating the manipulation device 35, instruct the direction and flow rate of the hydraulic oil from the hydraulic pump 42, and operate the working machine 3.

The electric motor 41 is an AC motor driven by AC power supplied from the inverter 52. The inverter 52 is electrically connected to the battery 50, and converts a DC voltage, which is an output voltage of the battery 50, into an AC voltage. An output terminal of the inverter 52 is electrically connected to the electric motor 41. Therefore, the inverter 52 converts the DC voltage, applied from the battery 50, into the AC voltage and outputs the AC voltage to the electric motor 41, so that three-phase AC is supplied to the electric motor 41, and the electric motor 41 that is the AC motor is driven. The inverter 52 is controlled by a control signal from the control system 1, and executes a power conversion operation of converting DC power into AC power according to the control signal.

The battery 50 is an example of a "power supply" that supplies DC power to the inverter 52 and the like. The battery 50 is a chargeable/dischargeable power storage device (storage battery or secondary battery), and is, for example, a lithium ion battery in the present embodiment. In the present embodiment, the battery 50 is mounted on the working machine 3 in a replaceable manner, but it is not essential that the battery 50 is replaceable. In addition, the battery 50 has a temperature monitoring function (temperature sensor or the like) for monitoring the temperature (for example, cell temperature) of the battery 50, and outputs a battery temperature signal related to the temperature of the battery 50 to the control system 1.

An input terminal of the charger 51 can be electrically connected to an external power supply AC1 via a connection device 53. An output terminal of the charger 51 is electrically connected to the battery 50. In the present embodiment, as an example, the external power supply AC1 is an AC power supply such as a commercial power supply, and is not included in components of the working machine 3. The connection device 53 is a device that includes a connector 531 of a power supply cable C1 electrically connected to the external power supply AC1 and a power supply port 532 electrically connected to the charger 51, and detachably connects (the connector 531 of) the power supply cable C1 to the power supply port 532. Specifically, the power supply port 532 is a connector connected to the charger 51 via a cable, and the charger 51 is electrically connected to the external power supply AC1 by being connected to the connector 531 of the power supply cable C1.

As a result, in a state in which (the connector 531 of) the power supply cable C1 is connected to the power supply port 532, the charger 51 converts an AC voltage supplied from the external power supply AC1 into a DC voltage and applies the DC voltage to the battery 50 to charge the battery 50. The charger 51 is controlled by a control signal from the control system 1, and executes a power conversion operation of converting AC power into DC power according to the control signal. Moreover, the charger 51 has a remaining capacity monitoring function of monitoring the remaining capacity of the battery 50, and outputs a remaining capacity signal related to the remaining capacity of the battery 50 to the control system 1.

The heating unit 36 is a device for heating the battery 50. That is, in the battery 50, a temperature range suitable for charging and/or discharging is determined as an operating temperature range. Therefore, for example, the working machine 3 includes the heating unit 36 for heating the battery 50 so that the working machine 3 can be used even in a low temperature environment.

The heating unit 36 is thermally coupled to the battery 50 directly or indirectly (via a heating medium), and directly or indirectly heats the battery 50 during driving. In the present embodiment, as an example, the heating unit 36 is a heater attached to the battery 50, is controlled by a control signal from the control system 1, generates heat during energization according to the control signal, and executes heating of the battery 50. Here, the heating unit 36 is configured to be operable by receiving, for example, electric power from the battery 50 or electric power from the external power supply AC1.

Further, the working machine 3 includes a cooling device and the like in addition to the heating unit 36 in order to keep the battery 50 within an operating temperature range suitable for charging and/or discharging even under a high temperature environment. The cooling device is a device for cooling the battery 50.

The pressure sensor 37 detects a pressure of pilot oil between the direction switching valve 46 corresponding to the hydraulic motor 43 of the traveling unit 31 and the remote control valve 45. That is, the pressure sensor 37 detects a pilot pressure corresponding to a traveling manipulation command of the traveling unit 31 according to the manipulation of the manipulation device 35 (manipulation lever). As a result, the pressure sensor 37 can output a manipulation signal corresponding to the traveling manipulation of the working machine 3, and outputs the manipulation signal to the control system 1.

The temperature sensor 38 detects a temperature of hydraulic oil supplied from the hydraulic pump 42. As an example, the temperature sensor 38 is disposed in a tank that stores hydraulic oil supplied (pressure-fed) by the hydraulic pump 42, and outputs a hydraulic oil temperature signal corresponding to the temperature of the hydraulic oil in the tank to the control system 1.

The accelerator manipulation unit 39 is disposed in the driving unit 321 of the machine body 30 and receives a manipulation input by the user (operator). The accelerator manipulation unit 39 is a device manipulated to set a steady rotation speed of the electric motor 41, and is, for example, an accelerator dial, an accelerator lever, an accelerator pedal, or the like. The accelerator manipulation unit 39 is connected to the control system 1, and an accelerator manipulation signal generated by the manipulation of the accelerator manipulation unit 39 is input to the control system 1. In the present embodiment, as an example, the accelerator manipulation unit 39 is a dial-type manipulation unit that is rotationally manipulated, and sets the steady rotation speed of the electric motor 41 according to the rotational position of the dial-type manipulation unit.

The control system 1 mainly includes, for example, a computer system including one or more processors such as a Central Processing Unit (CPU) and one or more memories such as a Read Only Memory (ROM) and a Random Access Memory (RAM), and executes various types of processing (information processing). In the present embodiment, the control system 1 is an integrated controller that controls the entire working machine 3, and includes, for example, an Electronic Control Unit (ECU). However, the control system 1 may be provided separately from the integrated controller, or may mainly include one processor or a plurality of processors. The control system 1 will be described in detail in the section of "[2] Configuration of control system".

Moreover, in addition to the above-described configuration, the machine body 30 further includes the drive device, a communication terminal, and the like. The drive device is a device for supplying power to the attachment of the working unit 33, and includes a device (mechanism) such as a Power take-off (PTO) for extracting power from the electric motor 41 as power for driving the attachment including hydraulic equipment. Furthermore, the machine body 30 is provided with various sensors (including a camera) for detecting a detection target object in a monitoring area around the working machine 3, such as a camera for imaging the periphery of the machine body 30.

### [2] Configuration of control system

Next, the configuration of the control system 1 according to the present embodiment will be described with reference to Fig. 2. The control system 1 controls each unit (a heating unit 36, a pressure sensor 37, a temperature sensor 38, an accelerator manipulation unit 39, a battery 50, a charger 51, an inverter 52, and the like) of the machine body 30 of the working machine 3. The control system 1 is a component of the working machine 3, and constitutes the working machine 3 together with the machine body 30 and the like. In other words, the working machine 3 according to the present embodiment includes at least the control system 1 and the machine body 30 (including the traveling unit 31, the turning unit 32, and the working unit 33) on which the electric motor 41 is mounted.

The control system 1 is used for control of the working machine 3, and includes an acquisition processing unit 11, a drive processing unit 12, a limit processing unit 13, and a warm-up processing unit 14 as illustrated in Fig. 2. In the present embodiment, as an example, since the control system 1 mainly includes the computer system including one or more processors, the plurality of functional units (the acquisition processing unit 11 and the like) are achieved by the one or more processors executing a working machine control program. The plurality of functional units included in the control system 1 may be provided in a plurality of housings in a distributed manner, or may be provided in one housing.

The control system 1 is configured to be able to communicate with a device provided in each unit of the machine body 30. That is, at least the heating unit 36, the pressure sensor 37, the temperature sensor 38, the accelerator manipulation unit 39, the cutoff switch 461, the control valve 48, the battery 50, the charger 51, the inverter 52, and the like are connected to the control system 1. As a result, the control system 1 can control the charger 51, the inverter 52, and the like, and acquire a battery temperature signal from the battery 50, a hydraulic oil temperature signal from the temperature sensor 38, an accelerator manipulation signal from the accelerator manipulation unit 39, a remaining capacity signal from the charger 51 or a manipulation signal from the pressure sensor 37, and the like. Here, the control system 1 may directly exchange various types of information (data) with each device or indirectly exchange various types of information (data) via a repeater or the like.

The acquisition processing unit 11 executes acquisition processing of regularly or irregularly acquiring various types of data including a battery temperature signal from the battery 50, a hydraulic oil temperature signal from the temperature sensor 38, an accelerator manipulation signal from the accelerator manipulation unit 39, a remaining capacity signal from the charger 51, a manipulation signal from the pressure sensor 37, and the like. That is, the acquisition processing unit 11 acquires various types of data (information) including at least the temperature of the battery 50, the temperature of the hydraulic oil (hydraulic oil temperature), the steady rotation speed of the electric motor 41, the remaining capacity of the battery 50, and data related to the traveling manipulation of (the traveling unit 31 of) the working machine 3. The data acquired by the acquisition processing unit 11 is stored in, for example, a memory or the like.

The drive processing unit 12 executes drive processing of driving the electric motor 41 at a steady rotation speed when a monitored temperature is in a normal temperature region. The "monitored temperature" in the present disclosure is a temperature referred to in controlling the electric motor 41, and is, for example, a temperature of the battery 50 (also referred to as a "first detected temperature"), a temperature of hydraulic oil (also referred to as a "second detected temperature"), and/or an ambient temperature of the working machine 3. The "steady rotation speed" in the present disclosure is a rotation speed of the electric motor 41 in a steady state, and in the present embodiment, is a rotation speed set according to the manipulation of the accelerator manipulation unit 39.

That is, at least when a monitored temperature is in a normal temperature region, the drive processing unit 12 actuates the hydraulic pump 42 by driving the electric motor 41 at the steady rotation speed (manipulated by the accelerator manipulation unit 39). Specifically, the drive processing unit 12 sets a target rotation speed of the electric motor 41 to a steady rotation speed, and controls the inverter 52 so that the rotation speed of the electric motor 41 approaches or matches the steady rotation speed, thereby controlling the rotation speed of the electric motor 41.

The limit processing unit 13 executes limit processing of setting an upper limit value of the rotation speed of the electric motor 41 to a regulated rotation speed lower than the steady rotation speed when a monitored temperature is in a low temperature region lower than the normal temperature region. That is, when a monitored temperature is in a low temperature region, the limit processing unit 13 switches the target rotation speed of the electric motor 41 from the steady rotation speed to the regulated rotation speed lower than the steady rotation speed. As a result, the rotation speed of the electric motor 41 decreases as compared with a case where the monitored temperature is in the normal temperature region, and thus, the output of the hydraulic pump 42 decreases. The limit processing unit 13 outputs a control signal for decreasing the target rotation speed to the inverter 52 to decrease the rotation speed of the electric motor 41 (from the steady rotation speed).

That is, when the monitored temperature decreases and the normal temperature region is switched to the low temperature region, the rotation speed of the electric motor 41 that drives the hydraulic pump 42 decreases from the steady rotation speed to the regulated rotation speed (< steady rotation speed). On the other hand, when the monitored temperature increases and the low temperature region is switched to the normal temperature region, the rotation speed of the electric motor 41 that drives the hydraulic pump 42 increases from the regulated rotation speed to the steady rotation speed.

The warm-up processing unit 14 controls the heating unit 36 to execute warm-up processing of heating the battery 50. That is, the warm-up processing unit 14 heats the battery 50 (warm-up operation) by energizing the heating unit 36 so that the temperature of the battery 50 falls within an operating temperature range suitable for charging and/or discharging, for example, in a low temperature environment.

In addition to the above configuration, the control system 1 includes a charging processing unit that controls the charger 51 to charge the battery 50, a control processing unit that controls the machine body 30 according to the manipulation of the manipulation lever or the like, a storage unit, and the like.

### [3] Working machine control method

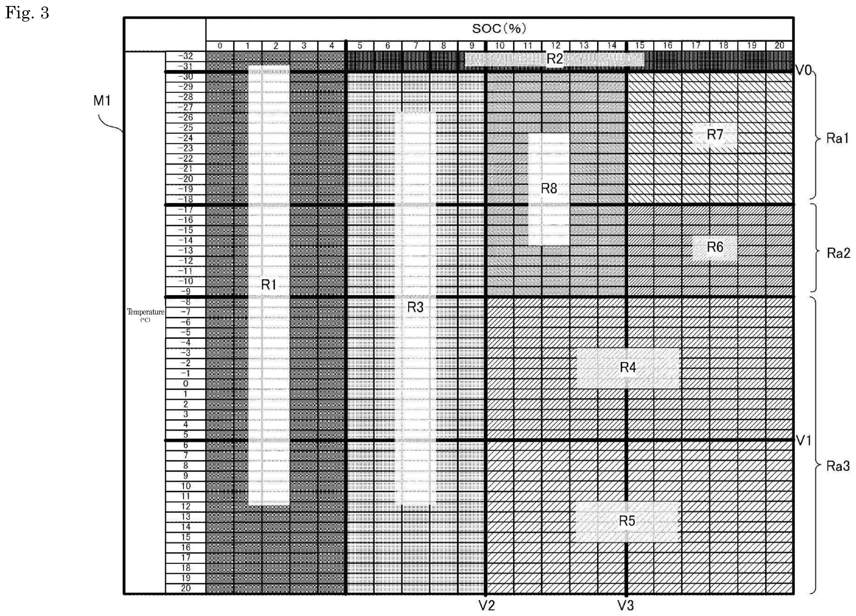

Hereinafter, an example of a control method of the working machine 3 (hereinafter, simply referred to as a "control method") mainly executed by the control system 1 will be described with reference to Figs. 3 to 5.

The control method according to the present embodiment is executed by the control system 1 mainly including the computer system; in other words, the control method is embodied by the working machine control program (hereinafter, simply referred to as a "control program"). That is, the control program according to the present embodiment is a computer program for causing one or more processors to execute each type of processing related to the control method. Such a control program may be executed by, for example, the control system 1 and a display device in cooperation with each other.

Here, when a specific start manipulation set in advance for executing the control program is performed, the control system 1 executes the following various types of processing related to the control method. The start manipulation is, for example, a manipulation of starting the working machine 3, that is, a manipulation of turning on a main switch or the like. On the other hand, when a specific end manipulation set in advance is performed, the control system 1 ends the following various types of processing related to the control method. The end manipulation is, for example, a manipulation of stopping the working machine 3, that is, a manipulation of turning off the main switch or the like.

In the present embodiment, the control system 1 operates according to a control map M1 as exemplified in Fig. 3. The control map M1 illustrated in Fig. 3 is a map in which different control modes are allocated to respective regions R1 to R8 when a horizontal axis represents a remaining capacity (SOC: State Of Charge) of the battery 50 and a vertical axis represents a monitored temperature.

Specifically, since an overdischarge abnormality of the battery 50 is suspected in a region R1 where the remaining capacity of the battery 50 is extremely low (for example, less than 5%), a control mode for prohibiting (disabling) the operation of the working machine 3 is allocated to the region R1. Since a low temperature abnormality of the battery 50 is suspected in a region R2 where the monitored temperature is extremely low (for example, less than -30°C), a control mode for prohibiting (disabling) the operation of the working machine 3 is allocated to the region R2. Furthermore, in the control mode allocated to the region R2, the heating unit 36 can operate only by receiving electric power from the external power supply AC1 instead of electric power from the battery 50, and the warm-up operation is performed by power supply from the external power supply AC1.

Since a low voltage abnormality of the battery 50 is suspected in a region R3 where the remaining capacity of the battery 50 is low (for example, 5% or more and less than 10%), a control mode for limiting the upper limit value of the rotation speed of the electric motor 41 to the regulated rotation speed lower than the steady rotation speed is allocated to the region R3.

In addition, in the control map M1, an area where the remaining capacity of the battery 50 is equal to or more than a remaining capacity threshold V2 (for example, 10%) and the monitored temperature is equal to or higher than a temperature threshold V0 (for example, - 30°C) is divided into regions R4 to R8.

Since the battery 50 is estimated to be within the appropriate operating temperature range in the regions R4 and R5 where the monitored temperature is in a normal temperature region Ra3 (for example, -8°C or higher), the control mode in which the limit on the regulated rotation speed is not imposed on the rotation speed of the electric motor 41 is allocated to the regions R4 and R5. Therefore, in the regions R4 and R5, the electric motor 41 can be driven at the steady rotation speed set by the accelerator manipulation unit 39.

In particular, in the region R5 where the temperature is equal to or higher than a switching temperature V1 (for example, 6°C) among the regions R4 and R5, an idle-up function that can increase the rotation speed of the electric motor 41 to a high idle rotation speed higher than the steady rotation speed is enabled when the traveling manipulation of the working machine 3 is performed. On the other hand, in the region R4 where the temperature is less than the switching temperature V1 among the regions R4 and R5, the idle-up function is disabled, and even when the traveling manipulation of the working machine 3 is performed, the rotation speed of the electric motor 41 is maintained at the steady rotation speed.

On the other hand, a control mode for limiting the upper limit value of the rotation speed of the electric motor 41 to the regulated rotation speed and performing the warm-up operation is allocated to a region R6 where the monitored temperature is in a low temperature region Ra2 (for example, -17°C or higher and less than -8°C) lower than the normal temperature region Ra3 and the remaining capacity of the battery 50 is equal to or more than a remaining capacity threshold V3 (for example, 15%). In the control mode allocated to the region R6, the heating unit 36 receives electric power from the battery 50 and performs the warm-up operation.

In addition, a control mode for stopping the electric motor 41 and performing the warm-up operation is allocated to a region R7 where the monitored temperature is in a cryogenic region Ra1 (for example, -30°C or higher and less than -17°C) lower than the low temperature region Ra2 and the remaining capacity of the battery 50 is equal to or more than the remaining capacity threshold V3. In the control mode allocated to the region R7, the heating unit 36 receives electric power from the battery 50 and performs the warm-up operation.

A control mode for limiting the upper limit value of the rotation speed of the electric motor 41 to the regulated rotation speed and stopping the warm-up operation is allocated to a region R8 where the monitored temperature is in the low temperature region Ra2 or the cryogenic region Ra1 and the remaining capacity of the battery 50 is less than the remaining capacity threshold V3.

As described above, the control method according to the present embodiment is a control method of the working machine 3 including the electric motor 41 driven by the electric power of the battery 50 and the hydraulic pump 42 driven by the electric motor 41 and configured to supply hydraulic oil to the hydraulic actuator. This control method includes driving the electric motor 41 at a steady rotation speed when a monitored temperature is in a normal temperature region Ra3, and setting an upper limit value of the rotation speed of the electric motor 41 to a regulated rotation speed lower than the steady rotation speed when the monitored temperature is in a low temperature region Ra2 lower than the normal temperature region Ra3.

That is, according to the control map M1 of Fig. 3, when the remaining capacity of the battery 50 is equal to or more than the remaining capacity threshold V3, the electric motor 41 is driven at the steady rotation speed in the regions R4 and R5 where the monitored temperature is in the normal temperature region Ra3, and the upper limit value of the rotation speed of the electric motor 41 is limited to the regulated rotation speed (< steady rotation speed) in the region R6 where the monitored temperature is in the low temperature region Ra2. Therefore, there is an advantage that, for example, even if the output of the battery 50 that supplies electric power to the electric motor 41 decreases under a low temperature environment, the electric motor 41 can be operated within a range covered by the output of the battery 50 at this time, and the operation of the working machine 3 is less likely to be hindered.

More specifically, the control system 1 refers to the control map M1 with respect to the monitored temperature, and drives the electric motor 41 at the steady rotation speed by the drive processing unit 12 when the monitored temperature is in the normal temperature region Ra3. On the other hand, in the control system 1, when the monitored temperature is in the low temperature region Ra2, the limit processing unit 13 sets the upper limit value of the rotation speed of the electric motor 41 to the regulated rotation speed (< steady rotation speed). As a result, in a low temperature environment where the output of the battery 50 decreases, the rotation speed of the electric motor 41 automatically decreases to the regulated rotation speed (< steady rotation speed) or less, so that the operation of the electric motor 41 can be covered by the output of the battery 50.

Here, the steady rotation speed is set according to the manipulation of the accelerator manipulation unit 39. Therefore, the user (operator) can designate the rotation speed of the electric motor 41 when the monitored temperature is in the normal temperature region Ra3, for example, according to the work content and the like, and the improvement in workability can be expected.

In addition, in the control method according to the present embodiment, the electric motor 41 is controlled according to the remaining capacity of the battery 50 in addition to the monitored temperature. That is, as in the regions R6 and R8 in the control map M1 of Fig. 3, the control mode is switched also depending on the remaining capacity of the battery 50. Therefore, it is possible to operate the working machine 3 within a range that can be covered in consideration of the remaining capacity of the battery 50.

In the control method according to the present embodiment, the battery 50 is heated when the monitored temperature is in the low temperature region Ra2. That is, since the warm-up operation for heating the battery 50 is performed in the region R6, the battery 50 can be brought into an appropriate operating temperature range as early as possible.

Further, in the control method according to the present embodiment, when the monitored temperature is in the cryogenic region Ra1 lower than the low temperature region Ra2, the upper limit value of the rotation speed of the electric motor 41 is set to the regulated rotation speed lower than the steady rotation speed to drive the electric motor 41 and the heating of the battery 50 is stopped, or the driving of the electric motor 41 is stopped and the battery 50 is heated. In short, in the cryogenic region Ra1, since the output of the battery 50 significantly decreases, there is a possibility that the output of the battery 50 cannot cover both the drive of the electric motor 41 and the warm-up operation. Therefore, as in the regions R7 and R8 in the control map M1 of Fig. 3, in the cryogenic region Ra1, by setting a control mode in which only one of the drive of the electric motor 41 and the warm-up operation is performed, an appropriate operation can be performed even in the cryogenic region Ra1.

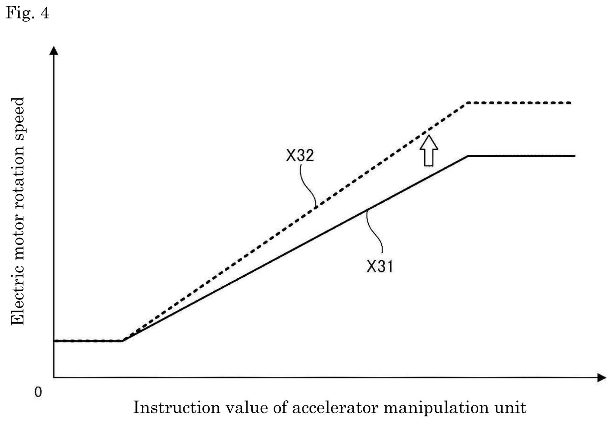

In the present embodiment, as described above, the drive processing unit 12 has the idle-up function of increasing the rotation speed of the electric motor 41 to the high idle rotation speed higher than the steady rotation speed when the traveling manipulation of the working machine 3 is performed. That is, in the normal temperature region Ra3, as illustrated in Fig. 4, the drive processing unit 12 drives the electric motor 41 at a steady rotation speed X31 when the traveling manipulation of the working machine 3 is not performed, whereas the drive processing unit increases the rotation speed of the electric motor 41 to a high idle rotation speed X32 (> the steady rotation speed X31) when the traveling manipulation of the working machine 3 is performed. As a result, at the time of the traveling manipulation of the working machine 3, the output of the hydraulic pump 42 is temporarily increased, and the simultaneous operation of the traveling unit 31, the working unit 33, and the like can be easily achieved.

Here, the idle-up function is not always enabled, and is enabled only when the monitored temperature is in the region R5 equal to or higher than the switching temperature V1 in the normal temperature region Ra3. That is, when the monitored temperature is in the region R4 less than the switching temperature V1 in the normal temperature region Ra3, the idle-up function is disabled.

As described above, in the control method according to the present embodiment, in a case where the monitored temperature is in the region equal to or higher than the switching temperature V1 in the normal temperature region Ra3, when the traveling manipulation of the working machine 3 is performed, the electric motor 41 is driven at the high idle rotation speed higher than the steady rotation speed. On the other hand, in a case where the monitored temperature is in a region lower than the switching temperature V1 in the normal temperature region Ra3, even when the traveling manipulation of the working machine 3 is performed, the electric motor 41 is driven at the steady rotation speed. As a result, even if the monitored temperature is less than the normal temperature region Ra3, the electric motor 41 can be driven at the steady rotation speed without idling up according to the traveling manipulation of the working machine 3, so that the operation of the working unit 33 can be secured.

In the control method according to the present embodiment, in the low temperature region Ra2, the regulated rotation speed is set according to the monitored temperature. When the monitored temperature is in the region lower than a specific temperature in the low temperature region Ra2, the regulated rotation speed is set lower than when the monitored temperature is in the region equal to or higher than the specific temperature in the low temperature region Ra2. In short, the regulated rotation speed is not a constant value but changes according to the monitored temperature, and the regulated rotation speed also decreases as the monitored temperature decreases. Therefore, particularly when the output of the battery 50 significantly decreases in a low temperature environment, the regulated rotation speed is set to be lower, so that the operation of the electric motor 41 can be easily covered by the output of the battery 50.

In the present embodiment, the monitored temperature is a temperature determined based on the first detected temperature and the second detected temperature. That is, whether or not to impose a limit of the regulated rotation speed on the rotation speed of the electric motor 41 and the like is determined not by only one type of detected temperature but by two types of detected temperatures, and thus more appropriate control can be achieved.

Here, the first detected temperature is the temperature of the battery 50, and the second detected temperature is the temperature of the hydraulic oil (hydraulic oil temperature). In short, focusing on the temperature of the battery 50 enables control in anticipation of a decrease in output of the battery 50 due to a decrease in temperature of the battery 50, and focusing on the temperature of the hydraulic oil enables control in anticipation of an increase in hydraulic load due to an increase in viscosity of the hydraulic oil due to a decrease in temperature of the hydraulic oil. In the control method according to the present embodiment, it is possible to limit the rotation speed of the electric motor 41 by multiplying a rotation speed limit of the electric motor 41 in anticipation of a decrease in output of the battery 50 by a rotation speed limit of the electric motor 41 in anticipation of a decrease in temperature of the hydraulic oil.

In the present embodiment, which of the first detected temperature (the temperature of the battery 50) and the second detected temperature (the temperature of the hydraulic oil) is adopted as the monitored temperature is determined based on a predetermined condition. That is, the monitored temperature is a temperature selected based on a predetermined condition from among the first detected temperature and the second detected temperature.

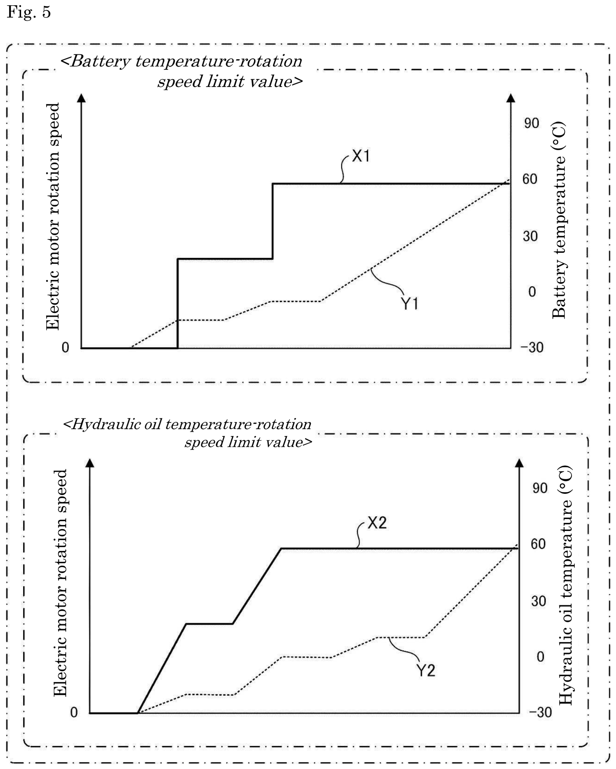

Specifically, as exemplified in Fig. 5, a relationship between a temperature Y1 of the battery 50 and a limited rotation speed X1 of the electric motor 41, and a relationship between a temperature Y2 of the hydraulic oil and a limited rotation speed X2 of the electric motor 41 are respectively defined. Then, using each relationship, the limit processing unit 13 takes a minimum value of the rotation speed in a case where the temperature is less than a certain temperature, and takes a maximum value of the rotation speed in a case where the temperature is a certain temperature or higher.

As an example, in the low temperature region Ra2, the rotation speed X1 of the electric motor 41 limited by the temperature of the battery 50 is compared with the rotation speed X2 of the electric motor 41 limited by the temperature of the hydraulic oil, and a temperature at which the rotation speed is smaller from among the temperature of the battery 50 and the temperature of the hydraulic oil is adopted as the monitored temperature. As a result, it is possible to perform control according to the monitored temperature so as to more reliably operate the working machine 3, for example, by successfully using two types of temperatures of the first detected temperature and the second detected temperature.

### [4] Modifications

Modifications of the first embodiment will be described one by one below. The modifications described below can be applied in combination as appropriate.

The control system 1 in the present disclosure includes a computer system. The computer system mainly includes one or more processors and one or more memories as hardware. The processor executes a program recorded in the memory of the computer system to achieve a function as the control system 1 in the present disclosure. The program may be recorded in advance in the memory of the computer system, may be provided through a telecommunication line, or may be recorded and provided in a non-transitory recording medium, such as a memory card, an optical disk, or a hard disk drive, that is readable by the computer system. Moreover, some or all of the functional units included in the control system 1 may be configured as an electronic circuit.

Moreover, it is not essential for the control system 1 that at least some functions of the control system 1 are integrated in one housing, and the components of the control system 1 may be provided in a plurality of housings in a distributed manner. Conversely, in the first embodiment, the functions distributed over a plurality of devices may converge into one housing. Furthermore, at least some functions of the control system 1 may be achieved by a cloud (cloud computing) or the like.

The power source of the working machine 3 is not limited to the electric motor 41. The working machine 3 may be, for example, a hybrid working machine having a drive mechanism that includes a plurality of power sources including the electric motor 41 and an engine (internal combustion engine) which generates power by combustion of fuel. In this case, the electric motor 41 and the engine are individually driven to generate power. Here, the power generated by the electric motor 41 and the power generated by the engine can be synthesized by a power transmission unit, and for example, the electric motor 41 can assist the engine so that more power can be generated as compared with a case where the engine is used alone. Furthermore, the power source of the working machine 3 may not include the electric motor 41. In this case, the electric power of the battery 50 is used by an electric load (an air conditioner, a lighting device, or the like) other than the electric motor 41 mounted on the working machine 3.

The control method of the working machine 3 can be applied to various vehicles, ships, flying objects, and the like without being limited to the working machine 3.

### [Additional Notes of Invention]

Hereinafter, an outline of the invention extracted from the above-described embodiment will be additionally described. Note that configurations and processing functions described in the following additional Notes can be selected to be combined as desired.

### <Additional Note 1>

A working machine control method of a working machine including an electric motor driven by electric power of a battery, and a hydraulic pump driven by the electric motor and configured to supply hydraulic oil to a hydraulic actuator, the working machine control method including:
driving the electric motor at a steady rotation speed when a monitored temperature is in a normal temperature region; and
setting an upper limit value of a rotation speed of the electric motor to a regulated rotation speed lower than the steady rotation speed when the monitored temperature is in a low temperature region lower than the normal temperature region.

### <Additional Note 2>

The working machine control method according to Additional Note 1, in which
the steady rotation speed is set according to manipulation of an accelerator manipulation unit.

### <Additional Note 3>

The working machine control method according to Additional Note 1 or 2, in which
the regulated rotation speed is set according to the monitored temperature in the low temperature region, and
when the monitored temperature is in a region lower than a specific temperature in the low temperature region, the regulated rotation speed is set lower than when the monitored temperature is in a region equal to or higher than the specific temperature in the low temperature region.

### <Additional Note 4>

The working machine control method according to any one of Additional Notes 1 to 3, in which
the monitored temperature is a temperature determined based on a first detected temperature and a second detected temperature.

### <Additional Note 5>

The working machine control method according to Additional Note 4, in which
the first detected temperature is a temperature of the battery, and the second detected temperature is a temperature of the hydraulic oil.

### <Additional Note 6>

The working machine control method according to Additional Note 4 or 5, in which
the monitored temperature is a temperature selected based on a predetermined condition from among the first detected temperature and the second detected temperature.

### <Additional Note 7>

The working machine control method according to any one of Additional Notes 1 to 6, further including:
controlling the electric motor according to a remaining capacity of the battery in addition to the monitored temperature.

### <Additional Note 8>

The working machine control method according to any one of Additional Notes 1 to 7, further including:
heating the battery when the monitored temperature is in the low temperature region.

### <Additional Note 9>

The working machine control method according to any one of Additional Notes 1 to 8, further including:
when the monitored temperature is in a cryogenic region lower than the low temperature region, setting an upper limit value of a rotation speed of the electric motor to a regulated rotation speed lower than the steady rotation speed to drive the electric motor and stopping heating of the battery, or stopping driving of the electric motor and heating the battery.

### <Additional Note 10>

The working machine control method according to any one of Additional Notes 1 to 9, in which
in a case where the monitored temperature is in a region equal to or higher than a switching temperature in the normal temperature region, when traveling manipulation of the working machine is performed, the electric motor is driven at a high idle rotation speed higher than the steady rotation speed, and
in a case where the monitored temperature is in a region lower than the switching temperature in the normal temperature region, even when the traveling manipulation of the working machine is performed, the electric motor is driven at the steady rotation speed.

### <Additional Note 11>

A working machine control program for causing one or more processors to execute:
the working machine control method according to any one of Additional Notes 1 to 10.

### LIST OF REFERENCE SIGNS

- 1: Working machine control system
- 3: Working machine
- 12: Drive processing unit
- 13: Limit processing unit
- 30: Machine body
- 39: Idle manipulation unit
- 41: Electric motor
- 42: Hydraulic pump
- 43: Hydraulic motor (hydraulic actuator)
- 44: Hydraulic cylinder (hydraulic actuator)
- 50: Battery
- Ra1: Cryogenic region
- Ra2: Low temperature region
- Ra3: Normal temperature region
- V1: Switching temperature

## Claims

1. A working machine control method of a working machine including an electric motor driven by electric power of a battery, and a hydraulic pump driven by the electric motor and configured to supply hydraulic oil to a hydraulic actuator, the working machine control method comprising:
driving the electric motor at a steady rotation speed when a monitored temperature is in a normal temperature region; and
setting an upper limit value of a rotation speed of the electric motor to a regulated rotation speed lower than the steady rotation speed when the monitored temperature is in a low temperature region lower than the normal temperature region.

2. The working machine control method according to claim 1, wherein the steady rotation speed is set according to manipulation of an accelerator manipulation unit.

3. The working machine control method according to claim 1 or 2, wherein
the regulated rotation speed is set according to the monitored temperature in the low temperature region, and
when the monitored temperature is in a region lower than a specific temperature in the low temperature region, the regulated rotation speed is set lower than when the monitored temperature is in a region equal to or higher than the specific temperature in the low temperature region.

4. The working machine control method according to claim 1 or 2, wherein the monitored temperature is a temperature determined based on a first detected temperature and a second detected temperature.

5. The working machine control method according to claim 4, wherein the first detected temperature is a temperature of the battery, and the second detected temperature is a temperature of the hydraulic oil.

6. The working machine control method according to claim 4, wherein the monitored temperature is a temperature selected based on a predetermined condition from among the first detected temperature and the second detected temperature.

7. The working machine control method according to claim 1 or 2, further comprising: controlling the electric motor according to a remaining capacity of the battery in addition to the monitored temperature.

8. The working machine control method according to claim 1 or 2, further comprising: heating the battery when the monitored temperature is in the low temperature region.

9. The working machine control method according to claim 1 or 2, further comprising: when the monitored temperature is in a cryogenic region lower than the low temperature region, setting an upper limit value of a rotation speed of the electric motor to a regulated rotation speed lower than the steady rotation speed to drive the electric motor and stopping heating of the battery, or stopping driving of the electric motor and heating the battery.

10. The working machine control method according to claim 1 or 2, wherein
in a case where the monitored temperature is in a region equal to or higher than a switching temperature in the normal temperature region, when traveling manipulation of the working machine is performed, the electric motor is driven at a high idle rotation speed higher than the steady rotation speed, and
in a case where the monitored temperature is in a region lower than the switching temperature in the normal temperature region, even when the traveling manipulation of the working machine is performed, the electric motor is driven at the steady rotation speed.

11. A working machine control program for causing one or more processors to execute: the working machine control method according to claim 1 or 2.

12. A working machine control system used in a working machine including an electric motor driven by electric power of a battery, and a hydraulic pump driven by the electric motor and configured to supply hydraulic oil to a hydraulic actuator, the working machine control system comprising:
a drive processing unit that drives the electric motor at a steady rotation speed when a monitored temperature is in a normal temperature region; and
a limit processing unit that sets an upper limit value of a rotation speed of the electric motor to a regulated rotation speed lower than the steady rotation speed when the monitored temperature is in a low temperature region lower than the normal temperature region.

13. A working machine comprising:
the working machine control system according to claim 12; and
a machine body on which the electric motor is mounted.
